# EUROPEAN PATENT SPECIFICATION

(11) **EP 3 517 332 B1**
(45) Date of publication and mention of the grant of the patent: **13.01.2021**
(21) Application number: 19461507.6
(22) Date of filing: 25.01.2019
(51) Int. Cl.: B60J 7/10, B60J 5/06

(54) **ZIPPED TARPAULIN**
PLANE MIT REISSVERSCHLUSS
BÂCHE ZIPPÉE

(30) Priority: 25.01.2018 PL 42438118
(43) Date of publication of application: 31.07.2019
(73) Proprietor: "WIELTON" Spolka Akcyjna, 98-300 Wielun (PL)
(72) Inventor: Kaczor, Maciej, 98-346 Skomlin (PL); Drozdel, Tomasz, 98-324 Wierzchlas (PL); Gadomski, Radoslaw, 98-320 Osjaków (PL); Ladra, Piotr, 98-345 Mokrsko (PL); Pisniak, Michal, 98-350 Biala (PL)
(74) Representative: AOMB Polska Sp. z.o.o.

(56) References cited:
- DE-U1- 20 219 203
- DE-U1- 29 705 174
- FR-A1- 2 382 868

## Description

The invention relates to a zipped tarpaulin which is intended for use in various types of trailers, semi-trailers or vehicles, wherein tarpaulins are used, in particular in curtain tarpaulins for truck semi-trailers.

There are many tarpaulin designs and fasteners used in tarpaulins, including those in curtain semi-trailers.

A Polish description of invention, patent application number PL398809 (BUP (Bulletin of the Patent Office) publication date 14 October, 2013), discloses a solution entitled "Protective tarpaulin with a seal for truck loading box or truck semi-trailer". The solution presented therein is characterised in that it comprises a seal consisting of two plastic strips joined together, wherein one strip - the sealing one, is wider and more flexible than the other strip, the pressure strip. The pressure strip is shaped so that it forms humps on its entire length, which humps are close in shape to half-rings. In a second version of the invention, the pressure strip forms a tunnel-like hump on the surface of the sealing strip.

Another Polish description of invention, patent application number PL.407646 (BUP publication date 28 September, 2015), discloses solution entitled "Tarpaulin fastener". The object of the invention is to fasten tarpaulins, wherein the entire fastening system is based on transferring the fastening from its surface into the frame, under the floor of the superstructure. One can use single fasteners at each belt, or a simple version, as one mechanism along the entire length of the tarpaulin. The mechanism is based on an axle, to which, by means of a crank, a slat is connected, which slat, when the axle is rotated, hooks the hook at the tarpaulin. The axle drive can be a latch with a lever or a worm gear. The tension can be provided by a spring, while a servo-motor can be used to release the tension. The whole mechanism is placed in the frame under the floor, making the tarpaulin flat from outside, with no protruding elements, and with a sufficiently strong mechanism a tarpaulin with reinforcements can be used. Instead of the crank, a slat gear may be used to provide the tension of the tarpaulin, tightening it backwards.

Another Polish description of invention, patent application PL.346408 (BUP publication date 11 February, 2002), discloses a solution entitled "Device for fastening a side-tarpaulin". The invention relates to fastening a tarpaulin to canopies for commercial vehicles, in particular foldable canopies for vehicle bodies and containers, comprising a canopy frame composed of upper longitudinal beams running along the length of the load compartment, supported on the vehicle chassis with upright supports and posts, wherein the bows supporting the roof covering, in particular the tarpaulin, displaceable in the longitudinal direction of the vehicle, are supported on the upper longitudinal beams of the canopy frame so that their ends or end caps, placed on the longitudinal beams, grip them laterally. On the other hand, tarpaulins, in particular side-wall tarpaulins, are fixed by means of non-releasable fixing means, passing through eyelets or recesses in the tarpaulin, to supporting elements, arranged at specific distances from each other, such as backing plates, hanging sliders, bow end caps and the like. The invention is characterized in that the tarpaulin is fixed to support elements by means of the eyelets provided for in it or U-shaped metal clamps, clasping around the edge reinforcement, and by means of non-releasable fixing means, passing through the metal clamps.

Another Polish description of invention, patent application PL.339498 (BUP publication date 23 October, 2000), discloses a solution entitled "Tarpaulin tensioner". The invention is characterised in that a tarpaulin tensioner is composed of a tension lever-hook module which includes a one-armed lever pivotally mounted and articulated about a pivot axis, and a hook for hooking on a stationary element, which is a frame profile that serves as an abutment against which the tarpaulin is tensioned, and fastening elements for transferring the tensioning movement exerted by the tension lever onto the tarpaulin. The lever-hook module is pivotally articulated relative to the base element. The hook is pivotally articulated about a pivot axis being parallel to and spaced apart from the pivot axis of the tension lever. A lorry with a tarpaulin cover is characterized in that it contains a certain number of tarpaulin tensioners attached to the lateral overhanging sides of the tarpaulin below the bottom of the hooks, wherein the bottom section of the tarpaulin is embedded between the wedging arm of the profile and the outer frame, whose rear cut forming the periphery is S-shaped.

Document DE20219203U1 discloses a tarpaulin connected to the roof by horizontally placed zipper, designed as two-way closure capable od being opened from both sides. The zipper is used in combination with tensioning means placed in the eyelets of the tarpaulin.

Additionally, DE29705174U1 refers to the prior art, among which fixation of the tarpaulins is provided by the usage of the zippers. Zippers mentioned there are used without any tensioning (adjusting) means. Because of this reason, the zippers may hold the tarpaulin not tight enough, or, since the tensile forces may be in some cases too strong (and cannot be adjusted), it may be difficult to close the zipper.

As another example, FR2382868A1 discloses zippers arranged vertically in the tarpaulin, which are integrated in the tarpaulins wall.

The purpose of the present invention is to construct a zipped tarpaulin that could be used in curtain semi-trailers and could significantly facilitate and accelerate access to goods on or being placed on a semi-trailer, while at the same time fully securing them after the tarpaulin is fastened.

According to the present invention there is provided a zipped tarpaulin having at least one of its walls comprising a zipper with a slider arranged horizontally along the lower edge of the wall, between said wall and a longitudinal element in the lower part of the wall.

The essence of the zipped tarpaulin presented herein consists in that the zipped tarpaulin has at least one additional row of teeth enabling the zipper to be fastened at various levels and the height of the tarpaulin to be adapted for semi-trailers with raised roof.

In a preferred embodiment, at least one additional row of teeth is provided obliquely relative to the lower teeth running parallel to the bottom edge of the tarpaulin.

Alternatively, the additional row of teeth is positioned horizontally in relation to the lower teeth running parallel to the bottom edge of the tarpaulin.

Preferably, the zipper is inseparably integrated - in a permanent manner - with the wall, usually sewn or glued or welded with it.

Preferably, the length of the zipper corresponds to the length of the wall and to that of the longitudinal element.

Preferably, the zipped tarpaulin is secured or tensioned: with tightening straps or a vertical tarpaulin tensioner, or with a "French" tensioner.

The solution according to the invention allows the operator of a semi-trailer to access and load it quickly, and subsequently to easily access goods in the semi-trailer. The solution minimises the need to use tension belts and eye hooks, while ensuring a favourable and even distribution of tarpaulin stresses. In addition, the invention improves the tightness of the semi-trailer, securing goods on the semi-trailer against the effects of changing weather conditions. Additionally, the solution presented here is easy and safe to operate. The use of the solution according to the invention in a semi-trailer does not require the use of specialized tools or devices during its operation.

The object of the invention is illustrated in detail in an embodiment in the drawings, wherein:

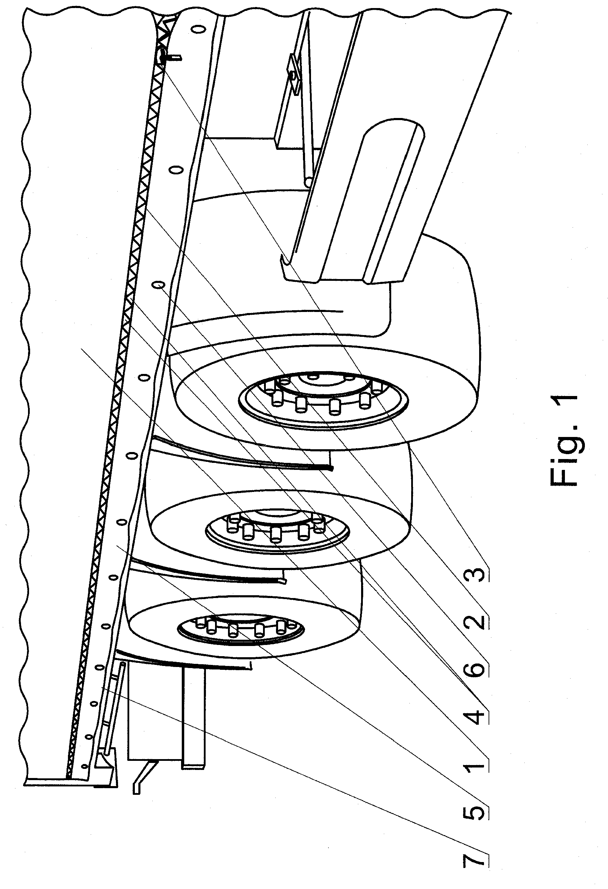

- Fig. 1: - presents a perspective view of a fragment of a curtain semi-trailer with installed tarpaulin fitted with a fastener, whereas

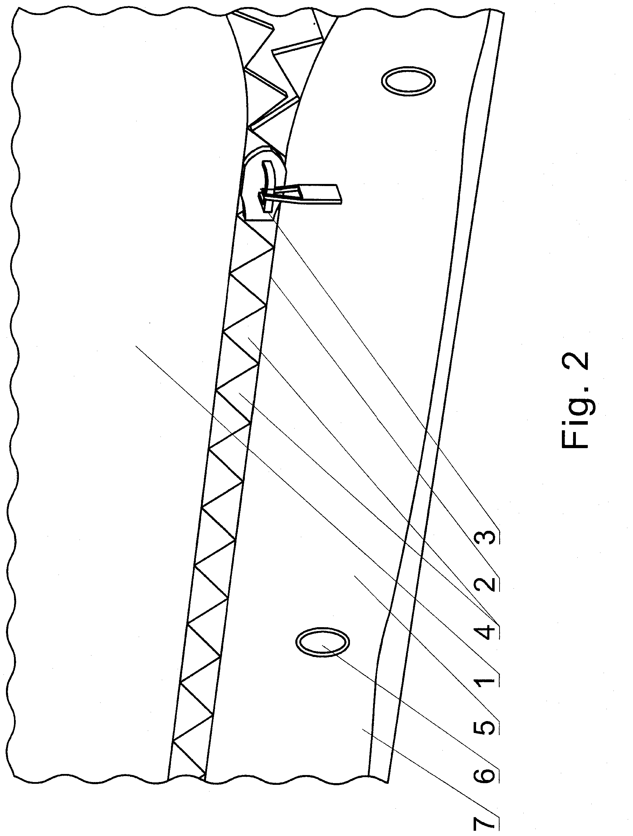

- Fig. 2: - presents a perspective view of the fastener in the tarpaulin of a curtain semi-trailer in close-up,
- Fig. 3: - presents an alternative version of the embodiment with an additional row of teeth enabling the tarpaulin curtain to be fastened with another zipper in a semi-trailer with adjustable (raised) roof.

As shown in the drawings, the zipped tarpaulin disclosed herein, which is usually used in a curtain semi-trailer, has a side wall 1, being an essential part of each side of the tarpaulin. The wall 1 comprises a zipper 2, sewn - usually horizontally - along its lower edge, along which the slider 3 moves, connecting or unfastening the upper and lower teeth 4 of the zipper 2.

The zipper 2 may be separably integrated with the side wall 1 of the tarpaulin, or it is inseparably integrated with same, preferably it is sewn or glued or welded with it. The zipper 2 connects or disconnects the wall 1 to the longitudinal element 5, if such an element is envisaged separately.

Optimally, the length of the longitudinal element 5, which is located below the side wall 1, corresponds to the length of the wall 1. Then, the wall 1 and the longitudinal element 5, joined together with the zipper 2, form a single, tight and uninterrupted plane, being the lateral part of the zipped tarpaulin. A tarpaulin with a zipper 2 so fabricated improves safety of goods transported in a curtain semi-trailer, providing tight cover and securing them against moisture, as well as protecting them in the case the weather conditions change.

Both the wall 1 and the longitudinal element 5 - forming the complete lateral plane of the tarpaulin - can be used primarily in the individual sides of the curtain semi-trailer. If the longitudinal element 5 of the tarpaulin wall 1 is envisaged separately - it is usually fixed in a permanent and inseparable manner to the central lower tightener mechanism 7 using intermediate elements, e.g. screws or rivets 6.

The horizontal arrangement of the zipper 2, which connects the wall 1 to the longitudinal element 5 below it, affects favourably the even distribution of stresses in the tarpaulin. On the other hand, the additional vertical tension of the tarpaulin is obtained by tightening it with the central lower tightener 7, located in the lower part of the tarpaulin. The developed solution is used together with the existing, known solutions, such as: tightening straps, vertical tarpaulin tensioner, or "French" tensioner, or it is used independently of them, as a self-contained fastening with a zipper.

A tarpaulin with zipper 2 so fabricated will ensure in the curtain semi-trailer quick and easy access to the transported goods, improve the tightness of the semi-trailer and will improve the safety of the semi-trailer's load.

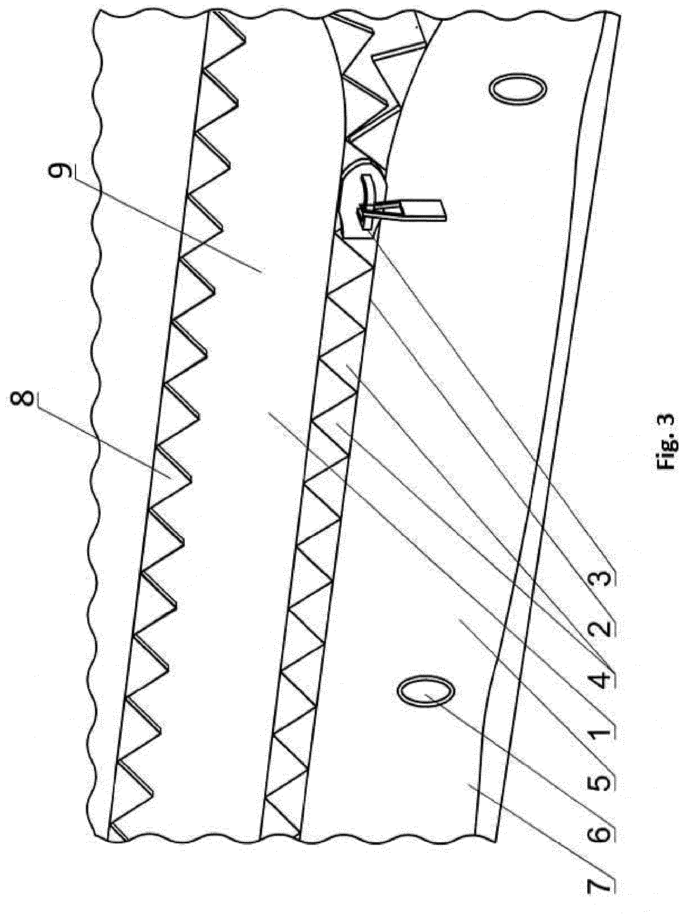

Fig. 3, in turn, shows another preferred embodiment of the tarpaulin intended in particular for semi-trailers with a raised roof, i.e., the height of which can be adjusted. For this purpose, preferably an additional row of teeth is provided in the upper part of the tarpaulin. This additional row of teeth 8 allows the lower portion of the tarpaulin to be fastened with another zipper (e.g. the longitudinal member 5) and provides a wide range of roof height adjustment while maintaining aesthetics and uniform tension of the tarpaulin.

An additional row of teeth 8 can be placed obliquely relative to the lower teeth 4 of the zipper 2 running parallel to the bottom edge of the tarpaulin. The solution with teeth 8 arranged obliquely has a particularly advantageous application when the height of the roof of the semi-trailer is not the same over the entire length, which may be due to different heights of the tractor the semi-trailer is coupled with. In this situation, the front part of the semi-trailer after coupling to the tractor may be higher or lower than the rear part of the semi-trailer.

This makes it necessary to adjust the roof to compensate for these differences in height by raising or lowering the front (or rear) section of the roof. However, due to the fact that the front part of the roof was raised and the rear part remained at the same height, the tarpaulin tension is not even, which results in the wrinkles of the material, which not only looks unsightly, but also makes it difficult to tightly secure the load inside because of slits formed as a result of material folding. The use of an additional row of teeth 8 arranged obliquely enables the tarpaulin to be fastened with another zipper in the event of a height difference and an even tension of the tarpaulin and aesthetic appearance.

In an alternative embodiment, the additional row of teeth 8 may be arranged parallel to the lower teeth 4. Such a solution ensures easy adjustment of the roof height and eliminates an additional strip of material in the form of a fold 9 arising after lowering the roof from a raised position to a position in the lower roof position, when the roof is not raised.

It is also conceivable to use more than one additional row of teeth 8, e.g. one obliquely and the other horizontally in relation to the lower teeth.

If an additional row of teeth 4 is used, the central lower tightener is not necessary.

### List of elements

- 1.: wall
- 2.: zipper
- 3.: slider
- 4.: tooth
- 5.: longitudinal element
- 6.: rivet
- 7.: central lower tightener
- 8.: additional row of teeth
- 9.: fold of side wall material

## Claims

1. A zipped tarpaulin with at least one of its walls comprising a zipper (2) with a slider (3) wherein the zipper (2) is arranged horizontally along the lower edge of the wall (1), between said wall (1) and a longitudinal element (5) in the lower part of the wall (1), **characterised in that** it has at least one additional row of teeth (8) enabling the zipper (2) to be fastened at various levels and the height of the tarpaulin to be adapted for semi-trailers with a raised roof.

2. The zipped tarpaulin according to claim 1, **wherein** the zipper (2) is inseparably integrated in a permanent manner with the wall (1), preferably sewn or glued or welded with it.

3. The zipped tarpaulin according to claim 1 or 2, **wherein** the length of the zipper (2) corresponds to the length of the wall (1) and to that of the longitudinal element (5).

4. The zipped tarpaulin according to claim 1 or 2 or 3, **wherein** it is secured or tensioned: with tightening straps or a vertical tarpaulin tensioner, or with a "French" tensioner.

5. The zipped tarpaulin according to claim 1, **wherein** at least one additional row of teeth (8) is provided obliquely relative to the lower teeth (4) running parallel to the bottom edge of the tarpaulin.

6. The zipped tarpaulin according to claim 1 or 5, **wherein** at least one additional row of teeth is positioned horizontally in relation to the lower teeth (4) running parallel to the bottom edge of the tarpaulin.

## Patentansprüche

1. Eine Plane mit Reißverschluss, bei der mindestens eine ihrer Wände einen Reißverschluss (2) mit einem Schieber (3) aufweist, wobei der Reißverschluss (2) horizontal entlang des unteren Randes der Wand (1) zwischen dieser Wand (1) und einem Längselement (5) im unteren Teil der Wand (1) angeordnet ist, **dadurch gekennzeichnet, dass** sie mindestens eine zusätzliche Zahnreihe (8) aufweist, die es ermöglicht, den Reißverschluss (2) in verschiedenen Höhen zu befestigen und die Höhe der Plane an Sattelanhänger mit erhöhtem Dach anzupassen.

2. Die Plane mit Reißverschluss nach Anspruch 1, **wobei** der Reißverschluss (2) untrennbar und dauerhaft mit der Wand (1) verbunden, vorzugsweise mit dieser vernäht oder verklebt oder verschweißt ist.

3. Die Plane mit Reißverschluss nach Anspruch 1 oder 2, **wobei** die Länge des Reißverschlusses (2) der Länge der Wand (1) und der des Längselementes (5) entspricht.

4. Die Plane mit Reißverschluss nach Anspruch 1 oder 2 oder 3, **wobei** sie gesichert oder gespannt ist: mit Spanngurten oder einer vertikalen Spannvorrichtung oder mit einer "französischen" Spannvorrichtung.

5. Die Plane mit Reißverschluss nach Anspruch 1, **wobei** mindestens eine zusätzliche Zahnreihe (8) schräg zu den unteren Zähnen (4) vorgesehen ist, die parallel zur Unterkante der Plane verläuft.

6. Die Plane mit Reißverschluss nach Anspruch 1 oder 5, **wobei** mindestens eine zusätzliche Zahnreihe horizontal in Bezug auf die unteren Zähne (4), die parallel zur Unterkante der Plane verlaufen, angeordnet ist.

## Revendications

1. Bâche zippée avec au moins une de ses parois comprenant une fermeture éclair (2) avec un curseur (3), dans laquelle une fermeture éclair (2) est disposée horizontalement le long du bord inférieur de la paroi (1), entre ladite paroi (1) et un élément longitudinal (5) dans la partie inférieure de la paroi (1), **caractérisée en ce qu'**elle présente au moins une rangée supplémentaire de dents (8) permettant de fixer une fermeture éclair (2) à différents niveaux et à la hauteur de la bâche à adapter pour les semi-remorques à toit surélevé.

2. Bâche zippée selon la revendication 1, **dans laquelle** une fermeture éclair (2) est intégrée inséparablement de manière permanente avec la paroi (1), de préférence cousue ou collée ou soudée avec elle.

3. Bâche zippée selon la revendication 1 ou 2, **dans laquelle** la longueur de la fermeture éclair (2) correspond à la longueur de la paroi (1) et à celle de l'élément longitudinal (5).

4. Bâche zippée selon la revendication 1 ou 2 ou 3, **dans laquelle** elle est fixée ou tendue: avec des sangles de serrage ou un tendeur de bâche vertical, ou avec un tendeur « français ».

5. Bâche zippée selon la revendication 1, **dans laquelle** au moins une rangée supplémentaire de dents (8) est prévue obliquement par rapport aux dents inférieures (4) s'étendant parallèlement au bord inférieur de la bâche.

6. Bâche zippée selon la revendication 1 ou 5, **dans laquelle** au moins une rangée supplémentaire de dents est positionnée horizontalement par rapport aux dents inférieures (4) s'étendant parallèlement au bord inférieur de la bâche.
